# EUROPÄISCHE PATENTSCHRIFT

(11) **EP 0 545 111 B1**
(45) Veröffentlichungstag und Bekanntmachung des Hinweises auf die Patenterteilung: **03.07.1996**
(21) Anmeldenummer: 92119340.5
(22) Anmeldetag: 12.11.1992
(51) Int. Cl.: B60Q 1/076

(54) **Einrichtung zum Verstellen der Neigung von Scheinwerfern bei Kraftfahrzeugen**
Device for adjusting the inclination of vehicle headlamps
Dispositif de réglage de l'inclinaison de phares de véhicule

(30) Priorität: 04.12.1991 DE 4139906
(43) Veröffentlichungstag der Anmeldung: 09.06.1993
(73) Patentinhaber: ROBERT BOSCH GMBH, 70442 Stuttgart (DE)
(72) Erfinder: Seiler, Hartmut, Dipl.-Phys., W-7570 Baden-Baden (DE); Knab, Norbert, Dipl.-Ing. (FH), W-7604 Appenweier-Urloffen (DE)

(56) Entgegenhaltungen:
- EP-A- 0 367 668
- DE-A- 3 930 589

## Beschreibung

Die Erfindung betrifft eine Einrichtung zum Verstellen der Neigung von Scheinwerfern bei Kraftfahrzeugen nach der Gattung des Anspruchs 1.

Eine solche Einrichtung ist durch die EP-A-0 367 668 bekannt. Diese Einrichtung weist einen Elektromotor auf, der ein auf den Scheinwerfer wirkendes Stellelement antreibt. Außerdem ist ein mit einer Spannungsquelle und mit Masse verbundenes Sollwert-Potentiometer vorgesehen, durch das eine Solleinstellung des Scheinwerfers in Form einer Soll-Spannung vorgegeben wird. Ein mit einer Spannungsquelle und mit Masse verbundenes Istwert-Potentiometer ist durch den Elektromotor verstellbar und erfaßt die Isteinstellung des Scheinwerfers in Form einer Ist-Spannung. Eine Steuereinrichtung ist über ihre Eingänge mit den beiden Potentiometern verbunden und über ihre Ausgänge mit dem Elektromotor verbunden. In der Steuereinrichtung wird die Ist- mit der Soll-Spannung verglichen und abhängig von einer zwischen diesen Spannungen bestehenden Differenz der Elektromotor in der zur Nachführung der Ist- auf die Soll-Spannung erforderlichen Drehrichtung in Betrieb gesetzt. Durch eine Schaltung der Steuereinrichtung wird bei unter einem bestimmten unteren Grenzwert liegender Soll-Spannung der Betrieb des Elektromotors gestoppt oder der Elektromotor wird nicht in Betrieb gesetzt oder wird in einer Drehrichtung in Betrieb gesetzt, in der die Neigung des Scheinwerfers vergrößert wird. Durch diese Schaltung der Steuereinrichtung ist sichergestellt, daß bei unterbrochener Verbindung zwischen Steuereinrichtung und Sollwert-Potentiometer der Scheinwerfer sich in seiner Stellung mit größter Neigung befindet. Bei einem Kurzschließen der Verbindung zwischen Steuereinrichtung und Sollwert-Potentiometer erfolgt bei der bekannten Einrichtung jedoch eine

Verstellung des Scheinwerfers in eine Stellung mit geringer Neigung, so daß unter Umständen Blendgefahr besteht.

### Vorteile der Erfindung

Die erfindungsgemäße Einrichtung mit den Merkmalen des Anspruchs 1 hat demgegenüber den Vorteil, daß durch die Schaltung der Steuereinrichtung auch bei einem Kurzschließen der Verbindung zwischen Steuereinrichtung und Sollwert-Potentiometer eine Blendgefahr vermieden wird.

Durch die Ausbildung gemäß Anspruch 2 kann die Steuereinrichtung mit kompaktem Aufbau ausgeführt werden.

### Zeichnung

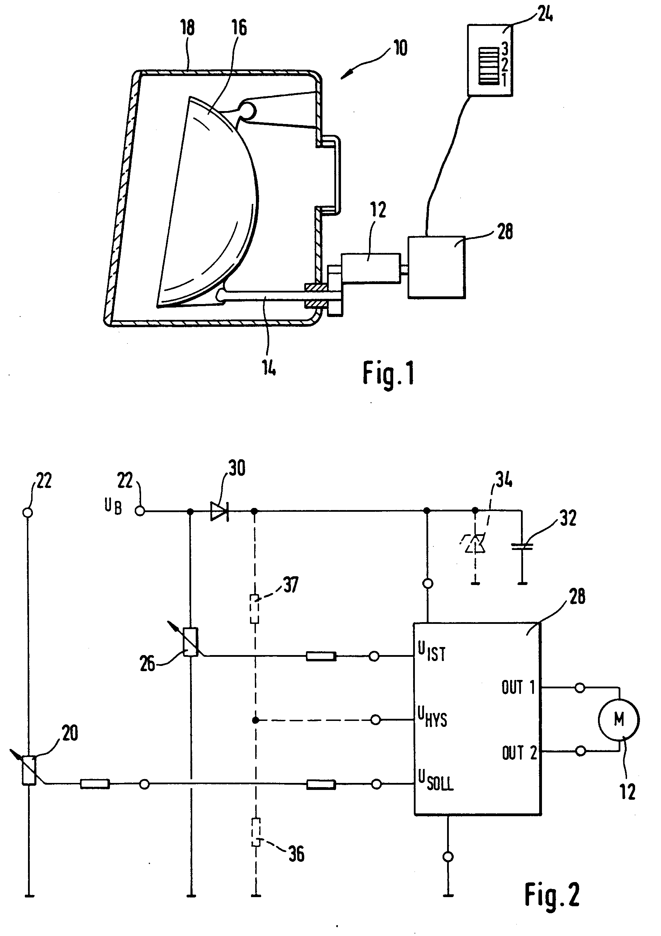

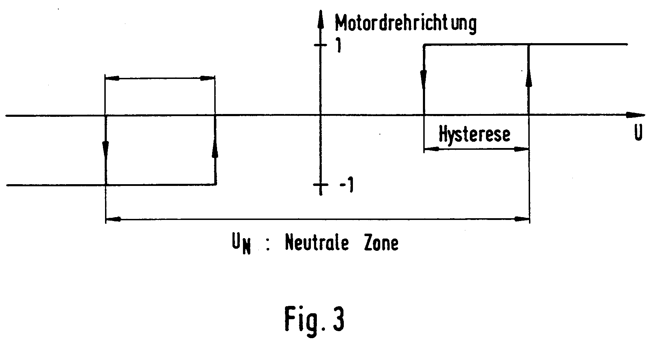

Ein Ausführungsbeispiel ist in der Zeichnung dargestellt und in der nachfolgenden Beschreibung näher erläutert. Es zeigen Figur 1 eine Scheinwerferanlage für Kraftfahrzeuge in schematischer Darstellung, Figur 2 das elektrische Schaltbild einer Einrichtung zum Verstellen der Neigung der Scheinwerfer von Figur 1 und Figur 3 ein Diagramm der Drehrichtung des Elektromotors der Einrichtung von Figur 2 über der an der Steuereinrichtung anliegenden Spannung.

### Beschreibung des Ausführungsbeispiels

Eine in Figur 1 dargestellte Scheinwerferanlage für ein Kraftfahrzeug weist zwei Scheinwerfer 10 auf, die an der Karosserie des Kraftfahrzeugs in nicht dargestellter Weise befestigt sind. Zum Ausgleich von durch Beladung des Kraftfahrzeugs bedingte Neigungsänderungen sind die Scheinwerfer durch eine Einrichtung in ihrer Neigung verstellbar. Die Einrichtung weist einen Elektromotor 12 auf, der auf ein Stellelement 14 wirkt, das mit dem Reflektor 16 des Scheinwerfers 10 verbunden ist und durch den Elektromotor 12 in einer linearen Bewegung angetrieben wird. Der Reflektor 16 ist in einem Gehäuse 18 wenigstens um eine horizontale Achse schwenkbar angeordnet.

Die Einrichtung zum Verstellen der Neigung des Reflektors 16 weist ein Sollwert-Potentiometer 20 auf, das mit einer Spannungsquelle 22, beispielsweise dem positiven Potential der Bordbatterie des Kraftfahrzeugs und mit Masse verbunden ist und außerdem mit einem Schalter 24 verbunden ist, durch den der elektrische Widerstand des Sollwert-Potentiometers 20 geändert werden kann. Der Schalter 24 kann beispielsweise im Armaturenbrett des Kraftfahrzeugs eingebaut sein, wo er vom Fahrer betätigt werden kann. Das Sollwert-Potentiometer 20 kann jedoch auch mit einer nicht dargestellten Auswerteeinrichtung einer die Einfederung des Kraftfahrzeugs an dessen Vorder- und Hinterachse erfassenden Einrichtung verbunden sein, durch die abhängig von der Einfederung das Sollwert-Potentiometer 20 verstellt wird.

Die Einrichtung weist außerdem ein Istwert-Potentiometer 26 auf, das durch den Elektromotor 12 mit dem Reflektor 16 mitverstellt wird und durch das die Ist-Einstellung der Neigung des Reflektors 16 erfaßt wird. Das Istwert-Potentiometer 26 ist ebenfalls mit dem positiven Potential der Batterie des Kraftfahrzeugs und mit Masse verbunden.

Das Sollwert-Potentiometer 20 und das Istwert-Potentiometer 26 ist mit jeweils einem Eingang einer Steuereinrichtung 28 verbunden. Die Steuereinrichtung 28 ist als ein Integrierter Schaltkreis ausgebildet. Die Steuereinrichtung 28 weist zwei Ausgänge auf, mit denen die beiden Pole des Elektromotors 12 verbunden sind. Außerdem ist die Steuereinrichtung 28 mit einer Versorgungsspannungsquelle 22, die ebenfalls das positive Potential der Kraftfahrzeugbatterie sein kann, und mit Masse verbunden.
Zwischen der Versorgungsspannungsquelle und der Steuereinrichtung 28 ist eine Diode 30 angeordnet, zum Schutz der Steuereinrichtung 28 vor den Folgen einer Umkehrung der Polarität der Versorgungsspannung. Parallel zur Steuereinrichtung 28 ist ein Kondensator 32 gelegt. Parallel zur Steuereinrichtung 28 kann außerdem eine Zenerdiode 34 als Schutzvorrichtung gegen Überspannungen gelegt sein.

In der Steuereinrichtung 28 werden die an deren Eingängen anliegenden Spannungen verglichen und deren Differenz verstärkt und diese über deren Ausgänge an den Elektromotor 12 gelegt. Der Elektromotor 12 wird dadurch in der zur Nachführung der Ist-Spannung zur Soll-Spannung erforderlichen Drehrichtung in Betrieb gesetzt und verstellt das Istwert-Potentiometer 26 und somit die Ist-Spannung. Die Steuereinrichtung 28 weist eine Hysteresefunktion auf, durch die bewirkt wird, daß der Elektromotor 12 nicht unmittelbar stehenbleibt, sobald die Ist-Spannung gleich der Soll-Spannung ist, sondern über diese Stellung etwas hinausläuft und erst stehenbleibt, wenn die Differenz zwischen Ist- und Soll-Spannung das Vorzeichen gewechselt hat und einen bestimmten Wert erreicht hat. Wenn beispielsweise durch eine entsprechende Verstellung des Sollwert-Potentiometers 20 eine Soll-Spannung vorgegeben wird, die größer als die Ist-Spannung ist, so wird der Elektromotor 12 in der Richtung betrieben, in der die Ist-Spannung vergößert wird. Der Elektromotor 12 wird dann durch die Steuereinrichtung 28 erst gestoppt, wenn die Ist-Spannung um einen vorgegebenen Wert größer geworden ist als die Soll-Spannung. Die Hysteresefunktion ist im Diagramm in Figur 3 dargestellt, wo die Drehrichtung des Elektromotors 12 über der Differenz U zwischen der Ist- und der Soll-Spannung dargestellt ist. Die Hysteresefunktion ist unabhängig von den absoluten Werten der Ist- und Soll-Spannung. Die Größe der Differenz zwischen Ist- und Soll-Spannung, der sogenannten Hysteresespannung, kann über außerhalb der Steuereinrichtung 28 angeordnete Widerstände 36,37 eingestellt werden, wobei jedoch zweckmäßigerweise ohne die externe Widerstandsbeschaltung 36,37 die Hysteresespannung intern auf einen geeigneten Wert eingestellt ist.

Die Steuereinrichtung 28 ist außerdem so ausgelegt, daß der Elektromotor 12 aus einer stehenden Position heraus erst in Betrieb gesetzt wird, wenn die Differenz zwischen Soll- und Ist-Spannung einen bestimmten Wert überschreitet. Diese Differenz bis zum Betrieb des Elektromotors wird auch als neutrale Zone bezeichnet und dient dazu, eine stabile Einstellung der Scheinwerfer 10 sicherzustellen. Dies ist in erster Linie deshalb notwendig, um ein Schwingen, das heißt ein ständiges Vor- und Zurücklaufen des Elektromotors 12 zu verhindern, da infolge der Massenträgheit der Elektromotor nach Erreichen der exakt erforderlichen Stellung stets noch ein wenig über diese Stellung hinaus das Istwert-Potentiometer 26 verstellt.

Wenn die an den Eingängen der Steuereinrichtung 28 anliegende Ist-Spannung oder Soll-Spannung einen unteren Grenzwert unterschreitet oder einen oberen Grenzwert überschreitet, so wird durch eine Schaltung der Steuereinrichtung 28 der Betrieb des Elektromotors 12 gestoppt beziehungsweise der Elektromotor nicht in Betrieb gesetzt oder im Sinne einer Vergrößerung der Neigung der Scheinwerfer 10 in Betrieb gesetzt. Im normalen Betrieb liegen an den Eingängen der Steuereinrichtung 28 nur Ist- und Soll-Spannungen an, die zwischen dem unteren Grenzwert und dem oberen Grenzwert liegen. Unterhalb des unteren Grenzwerts oder oberhalb des oberen Grenzwerts liegende Ist- und Soll-Spannungen treten nur bei Störungen der Potentiometer 20 oder 26 auf oder bei einer Unterbrechung der Verbindung eines der Potentiometer 20 oder 26 mit der Steuereinrichtung 28 oder bei einem Kurzschluß der Verbindung eines der Potentiometer. Der untere Grenzwert kann beispielsweise 5 % der Spannung der Fahrzeugbatterie betragen und der obere Grenzwert kann 95 % der Spannung der Fahrzeugbatterie betragen.

Auch bei einer Unterbrechung der Verbindungen des Sollwert-Potentiometers 20 oder des Istwert-Potentiometers 26 mit der Spannungsquelle 22 oder mit Masse wird der Betrieb des Elektromotors 12 gestoppt beziehungsweise der Elektromotor nicht in Betrieb gesetzt oder im Sinne einer Vergrößerung der Neigung der Scheinwerfer 10 in Betrieb gesetzt.

Die vorstehend beschriebenen Funktionen der Hysterese, der neutralen Zone und der Erkennung einer Über- oder Unterspannung am Eingang sind alle in der Steuereinrichtung 28 enthalten, so daß hierfür kein externer Schaltungsaufwand erforderlich ist.

## Patentansprüche

1. Einrichtung zum Verstellen der Neigung von Scheinwerfern bei Kraftfahrzeugen mit einem Elektromotor (12), der ein auf den Scheinwerfer (10) wirkendes Stellelement (14) antreibt, mit einem mit einer Spannungsquelle (22) und mit Masse verbundenen Sollwert-Potentiometer (20), durch das eine Solleinstellung des Scheinwerfers (10) in Form einer Soll-Spannung vorgegeben wird, mit einem mit einer Spannungsquelle (22) und mit Masse verbundenen Istwert-Potentiometer (26), das durch den Elektromotor (12) verstellbar ist und die Isteinstellung des Scheinwerfers (10) in Form einer Ist-Spannung erfaßt, und mit einer Steuereinrichtung (28), deren Eingänge mit den beiden Potentiometern (20,26) und deren Ausgänge mit dem Elektromotor (12) verbunden sind und in der die Ist- mit der Soll-Spannung verglichen wird und durch die abhängig von einer zwischen diesen Spannungen bestehenden Differenz der Elektromotor (12) in der zur Nachführung der Ist- zur Soll-Spannung erforderlichen Drehrichtung in Betrieb gesetzt wird, wobei durch eine Schaltung der Steuereinrichtung (28) der Betrieb des Elektromotors (12) gestoppt wird oder dieser nicht in Betrieb gesetzt wird oder in einer Drehrichtung in Betrieb gesetzt wird, in der die Neigung des Scheinwerfers (10) vergrößert wird, wenn die Soll-Spannung unter einem bestimmten unteren Grenzwert liegt, dadurch gekennzeichnet, daß durch die Schaltung der Steuereinrichtung (28) auch bei über einem bestimmten oberen Grenzwert liegender Soll-Spannung der Betrieb des Elektromotors gestoppt wird oder dieser nicht in Betrieb gesetzt wird oder in einer Drehrichtung in Betrieb gesetzt wird, in der die Neigung des Scheinwerfers (10) vergrößert wird.

2. Einrichtung nach Anspruch 1, dadurch gekennzeichnet, daß die Steuereinrichtung (28) als ein integrierter Schaltkreis ausgebildet ist.

## Claims

1. Device for adjusting the inclination of motor vehicle headlamps, having an electric motor (12) which drives an actuation element (14) which acts on the headlamp (10), having a desired-value potentiometer (20) which is connected to a voltage source (22) and to earth and by means of which a desired setting of the headlamp (10) is prescribed in the form of a desired voltage, having an actual-value potentiometer (26) which is connected to a voltage source (22) and to earth and which can be adjusted by the electric motor (12) and which detects the actual setting of the headlamp (10) in the form of an actual voltage, and having a control device (28) whose inputs are connected to the two potentiometers (20, 26) and whose outputs are connected to the electric motor (12) and in which the actual voltage is compared with the desired voltage and by means of which, as a function of a difference between these voltages, the electric motor (12) is activated in the direction of rotation which is required to adjust the actual voltage with respect to the desired voltage, the operation of the electric motor (12) being stopped by means of a switching process of the control device (28) or the said electric motor (12) not being activated or being actuated in a direction of rotation in which the inclination of the headlamp (10) is increased if the desired voltage lies below a specific lower limit value, characterized in that, as a result of the switching process of the control device (28), the operation of the electric motor is stopped even in the case of a desired voltage which lies above a specific upper limit value or the said electric motor is not activated or is activated in a direction of rotation in which the inclination of the headlamp (10) is increased.

2. Device according to Claim 1, characterized in that the control device (28) is constructed as an integrated circuit.

## Revendications

1. Installation de réglage de l'inclinaison des projecteurs de véhicules automobiles comprenant un moteur électrique (12) entraînant un élément de réglage (14) agissant sur le projecteur (10), un potentiomètre de valeur de consigne (20) relié à une source de tension (22) et à la masse, qui prédétermine un réglage de consigne du projecteur (10) sous la forme d'une tension de consigne, un potentiomètre de valeur réelle (26) relié à une source de tension (22) et à la masse, réglable par le moteur électrique (12) et détectant la position réelle du projecteur (10) sous la forme d'une tension réelle ainsi qu'une installation de commande (28) dont les entrées sont reliées aux deux potentiomètres (20, 26) et les sorties sont reliées au moteur électrique (12), qui compare la tension réelle à la tension de consigne et en fonction de la différence entre ces tensions, il commande le moteur électrique pour asservir la tension réelle sur la tension de consigne, dans le sens de rotation approprié, un circuit de l'installation de commande (28) arrêtant le fonctionnement du moteur électrique (12) ou ne mettant pas le moteur en marche ou encore le faisant tourner dans un sens de rotation augmentant l'inclinaison du projecteur (10) si la tension de consigne est inférieure à un seuil inférieur déterminé, caractérisée en ce que le circuit de l'installation de commande (28), en cas de tension de consigne dépassant un certain seuil supérieur, arrête le fonctionnement du moteur électrique ou ne met pas en marche ce moteur ou le fait tourner dans un sens de rotation augmentant l'inclinaison du projecteur (10).

2. Installation selon la revendication 1, caractérisée en ce que l'installation de commande (28) est sous la forme d'un circuit intégré.
